# EUROPEAN PATENT APPLICATION

(11) **EP 0 710 920 A2**
(43) Date of publication of application: **08.05.1996**
(21) Application number: 95117351.7
(22) Date of filing: 03.11.1995
(51) Int. Cl.: G06K 15/02, G06F 17/21

(54) **Character processing device**

(30) Priority: 04.11.1994 JP 271046/94
(71) Applicant: MAX CO., LTD., Tokyo (JP)
(72) Inventor: Shimoda, Mitugi, Chuo-ku, Tokyo (JP); Nobe, Nobuyuki, Chuo-ku, Tokyo (JP); Uchida, Kouetu, Chuo-ku, Tokyo (JP)
(74) Representative: Turi, Michael, Dipl.-Phys.

(57) **Abstract**

A character processing device comprising a memory for storing character data such as characters and symbols, and a data processing means for developing input character data into enlarged or reduced character data in accordance with input data indicative of a character and a character size, whereby the developed character data is drawn in a designated image forming area,
CHARACTERIZED by comprising:
means for detecting the highest point and the lowest point of the height of a train of input characters, and computing the full height; and
computing means for enlarging or reducing the full height of the train of characters on the basis of the computed full height.

## Description

### BACKGROUND OF THE INVENTION

### 1. Field of the Invention

The present invention relates to a character processing device, such as a plotter or a printer, and more particularly to a character processing device with the functions to enlarge and reduce the size of characters.

### 2. Description of the Related Art

When the character processing device, such as a pen plotter, a cutting plotter, or a lettering tape printer, is compared with a line printer or a page printer used mainly for printing documents, the former is designed placing an emphasis on the function to enlarge or reduce the size of characters including symbols. In the character processing device, character data of characters and symbols is stored in the form of vector fonts or dot fonts in the memory. The data processing unit develops a train of input characters in accordance with character-size designating data, and carries out a printing or cutting process of the developed character data for a designated image forming area.

As shown in Fig. 3(a), to designate the character size, the height h of the character from the base line BL to the top of the character is inputted in the unit of mm or point to the character processing device. The character processing device develops the character data in accordance with the designated numerical data, to thereby enlarge or reduce the characters. The character processing device reads the image forming data generated by the developing process from the memory, and carries out a process of drawing the image forming data.

Some of alphabet fonts, such as "g" and "j", are extended to below the base line BL which defines a preset character size, as shown. When those exceptional alphabet fonts are used for an actual printing, the lower parts of the alphabet fonts are not printed since those parts are extended to below the image forming area. In a specific example where the designated character height is 1/2 inch (12.7 mm) and a lettering tape of 14.5 mm wide is used, letters "g" and "j" are printed losing their lower parts (Fig. 3(b)).

Thus, the conventional character processing device, such as a plotter or a lettering tape printer, is able to incompletely print the exceptional alphabet fonts in a limited image forming area. In other words, exceptional letters, "g" and "j", are printed in a state that their lower parts are lost, when the image forming area is limited to have no space to receive those lower parts for their print.

To avoid such an unwanted situation, it is necessary to set the character size of a train of characters including "g" and "j" so that all of those characters fall within the image forming area. However, it is difficult to quantitatively recognize whether or not a train of characters including "A", "B", and "g" and "j" are within the image forming area. Some inference must be used for determining the character size to be within the image forming area. The result of the inference is inexact, actually.

### SUMMARY OF THE INVENTION

Accordingly, an object of the present invention is to provide a character processing device exactly confining the size of exceptional alphabetic letters, for example, "g" and "j", within the image forming area, and having an easy setting of the character size and hence an easy and simple operation of the character processing device for the character size setting.

To achieve the above object, there is provided a character processing device, such as a printer or a plotter, having a memory for storing character data, such as characters and symbols, and a data processing means for developing input character data into enlarged or reduced character data in accordance with input data indicative of a character and a character size, whereby the developed character data is visualized in a designated image forming area, the character processing device comprising: means for detecting the highest point and the lowest point of the height of a train of input characters, and computing the full height; and computing means for enlarging or reducing the full height of the train of characters on the basis of the computed full height.

The character size is designated and character data is inputted to the character processing device thus constructed. The data processing means of the character processing device detects the highest point and the lowest point of the height of character data that represents a train of input characters, and computes the full height of the train of the characters. It develops the character data on the basis of the computed full height of the character train so that the full height fall within the designated character size. Even if the input character train contains the characters that are large in excess of the area of the character size, the character size of the input character data is automatically adjusted so as to fall within the image forming area used.

### BRIEF DESCRIPTION OF THE DRAWINGS

Fig. 1 is a block diagram showing a lettering tape printer according to an embodiment of the present invention;
Figs. 2(a) and 2(b) show diagrams useful in explaining a process of developing character size, carried out by the lettering tape printer shown in Fig. 1; and
Figs. 3(a) is a diagram for explaining the character size, and Fig. 3(b) is a diagram useful in explaining a process of developing character size, carried out by a conventional character processing device.

### DETAILED DESCRIPTION OF THE PREFERRED EMBODIMENTS

The preferred embodiment of a character processing device according to the present invention will be described with reference to the accompanying drawings.

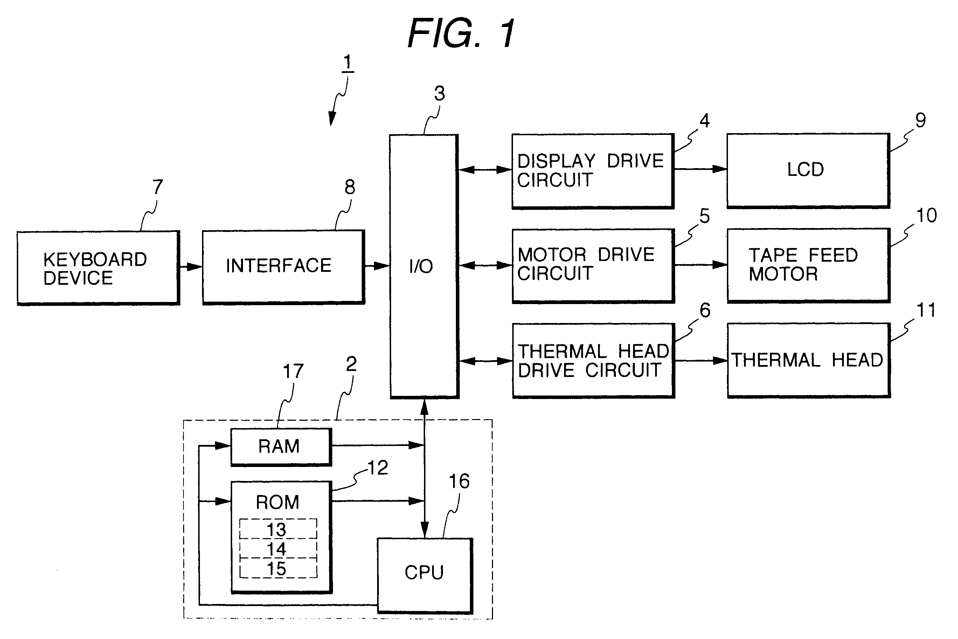

Fig. 1 is a black diagram showing a character processing device 1, for instance, a lettering tape printer. An input/output control unit 3 of a print controller 2 is connected to a display drive circuit 4, a motor drive circuit 5, and a thermal head drive circuit 6. A keyboard device 7 is connected to the input/put control unit 3 by way of an interface 8. The display drive circuit 4, the motor drive circuit 5, and the thermal head drive circuit 6 drives respectively an LCD 9, a tape feed motor 10, and a thermal head 11 under control of the print controller 2.

Data entered by the keyboard device 7 are displayed by the LCD 9, and input character data and control data of character size, for example, are processed by the print controller 2 as a data processing device.

The ROM 12 of the print controller 2 stores a data processing program 13, a print execution program 14, a size correction computing program 15, and the like. The data processing program 13 develops character data into enlarged/reduced data in accordance with input data for designating a character size. The size correction computing program 15 detects the highest point and the lowest point of the height of a train of input characters and compute the full height of the input character train, and adjusts the full height of the train of input characters to be equal to a designated character size, on the basis of the computed full height.

A CPU 16 in the print controller carries out a process of enlarging/reducing character data under control of a related program read out of the ROM 12, to thereby develop the character data into enlarged/reduced print data, and stores the print data into the RAM 17.

In response to a print execution command from the keyboard device 7, the CPU 16 reads print data from the RAM 17 and drives the motor drive circuit 5 and the thermal head drive circuit 6. With rotation of a capstan of the tape feed motor 10, a tape runs, and ink of an ink ribbon nipped between a thermal head and a tape is thermally transferred onto the tape. In this way, characters are printed on the tape.

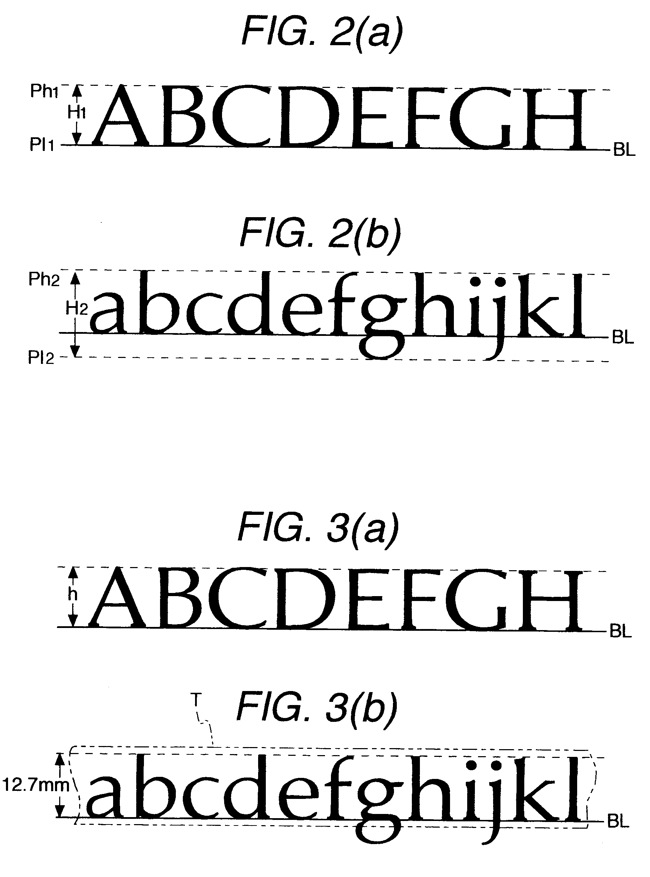

In a case that the character size is set at 15 mm, and a train of characters A, B, C, ... are entered, as shown in Fig. 2(a), the CPU 16 detects the highest point Ph1 and the lowest point Pl1 of the height of the train of the characters, and computes a difference between the highest point Ph1 and the lowest point Pl1, and produces the full height H1 of the character train. The CPU develops the character data into enlarged print data of which the full height H1 is 15 mm, the designated character size, by using the data processing program 13, and stores the thus generated print data into the RAM 17.

In a case that the same character size as of Fig. 2(a) is used and a train of characters including characters (e.g., "g" and "j", and referred to exceptional characters) whose lower parts are extended to below the base line (Fig. 2(b) is entered, the CPU 16 detects the highest point Ph2 and the lowest point Pl2 of the height of the train of the characters, and computes a difference between the highest point Ph2 and the lowest point Pl2, and produces the full height H2 of the character train. The CPU develops the character data into reduced print data of which the full height H2 is 15 mm, the designated character size, by using the data processing program 23, and stores the thus generated print data into the RAM 17.

Thus, the height H2 of the train of characters shown in Fig. 2(b) is automatically corrected to be within the height of 15 mm, as in the case of the height H1. All of the characters of the character train fall within an image forming area defined by the height of 15 mm. Even when the image forming area is limited by an area setting or the width of the character bearing means, and hence it has little space to receive the lower parts of those exceptional characters for their print, the character processing device of the present invention can print all of the characters including the exceptional characters within the limited image forming area, thereby providing a good print quality.

The above-mentioned embodiment uses the programs for computing the full height of the character train and for character size correction, which are stored in the ROM 12 of the print controller 2. The same functions may be realized by a hardware technique, as a matter of course. The character processing device of the present invention is described in the form of the lettering tape printer in the above-mentioned embodiment. It is evident that the present invention may be realized by a cutting plotter, a pen plotter, and the like. In this case, the size correction processing means discussed in the embodiment description is incorporated into the image-forming controller of any of those devices.

As seen from the foregoing description, the character processing device of the present invention detects the highest point and the lowest point of the height of a train of input characters, and adjusts the character size of the input character data to be equal to a designated character size. Accordingly, the character processing device can process a train of alphabetic letters for print so that all of those letters fall within an image forming area, if it is limited. With the inventive and unique construction of the present invention, a quality print is secured, and there is no need of the inference for confining the exceptional characters within the limited image forming area. Further, the automatic size correction function considerably simplifies the size setting operation of the device.

## Claims

1. A character processing device comprising a memory for storing character data such as characters and symbols, and a data processing means for developing input character data into enlarged or reduced character data in accordance with input data indicative of a character and a character size, whereby the developed character data is drawn in a designated image forming area,
CHARACTERIZED by comprising:
means for detecting the highest point and the lowest point of the height of a train of input characters, and computing the full height; and
computing means for enlarging or reducing the full height of the train of characters on the basis of the computed full height.

2. A character processing device comprising a memory for storing character data such as characters and symbols, and a data processing means for developing input character data into enlarged or reduced character data in accordance with input data indicative of a character and a character size, in which the developed character data is drawn in a designated image forming area on a tape member,
CHARACTERIZED by comprising:
means for detecting the highest point and the lowest point of the height of a train of input characters, and computing the full height; and
computing means for enlarging or reducing the full height of the train of characters on the basis of the computed full height, wherein the computing means determines the computed full height sufficient to draw the train of characters on the tape member.
